# EUROPEAN PATENT SPECIFICATION

(11) **EP 4 515 251 B1**
(45) Date of publication and mention of the grant of the patent: **22.07.2026**
(21) Application number: 23797099.1
(22) Date of filing: 24.04.2023
(51) Int. Cl.: G01N 35/04, B01L 9/00, G01N 35/10

(54) **APPARATUS FOR DELIVERY OF LABORATORY CONSUMABLES**
VORRICHTUNG ZUR ABGABE VON LABORVERBRAUCHSMITTELN
APPAREIL DE DISTRIBUTION DE MATÉRIEL DE LABORATOIRE

(30) Priority: 25.04.2022 US 202263334578 P
(43) Date of publication of application: 05.03.2025
(73) Proprietor: Telesis Bio Inc., San Diego, CA 92121 (US)
(72) Inventor: CURBBUN, Charles Stanley, San Diego, California 92121 (US); STOSSELL, Lee-Anne, San Diego, California 92121 (US); NGUYEN, Phu, San Diego, California 92121 (US); WARDEN, Laurence, San Diego, California 92121 (US)
(74) Representative: Kilburn & Strode LLP
(86) International application number: PCT/US2023/019668
(87) International publication number: WO 2023/211860

(56) References cited:
- EP-A2- 2 803 412
- CN-A- 114 295 851
- US-A- 3 843 323
- US-A- 5 735 387
- US-A1- 2009 229 954
- US-A1- 2012 295 358
- US-A1- 2012 295 358
- US-A1- 2020 271 681
- US-B2- 10 890 593
- US-B2- 6 808 304

## Description

### CROSS-REFERENCE TO RELAED APPLICATIONS

This application claims benefit of priority under 35 U.S.C. § 119(e) of U.S. Provisional Application No. 63/334,578, filed April 25, 2022.

### BACKGROUND OF THE INVENTION

### FIELD OF THE INVENTION

The invention relates to a laboratory apparatus for the storing and provision of labware consumables and chemical or biological samples.

### BACKGROUND INFORMATION

The modern laboratory depends on a variety of instrumentation to perform its vital functions. Clear advantages exist for the ability to increase to capacity and efficiency of these instruments. However, many of these advantages are not easily achievable because the configurations with which essential supplies are provided make disposable labware difficult to handle and/or load for use on laboratory instruments. Loading the labware for use by the instruments therefore often requires special or manually performed tasks. For example, pipette tips are provided pre-packaged in a plastic blister pack and pockets in the blister pack determine how the operator may manually grasp and handle the product. The orientation of the packaging as provided often determines how it can be transitioned to the instrument storage and use areas. While mechanical vertical stackers have been used, these are found to work well for handling some labware such as microplates but are less helpful for staging labware like pipette tips because of the awkward operation of loading tips from the original packaging, and other difficulties. If pipette tips are loaded in a vertical stacker, a mechanism is then needed to transport the tray and tips from the stacker to an area where the tips can be utilized by the instrument. This mechanism is complex and adds to the cost to the system. Additionally, labware needs to be immobilized during the loading procedure to prevent accidental dislodging of product from the rack. The racks are often designed with snap latch flexures to help secure the racks and are engaged when the tip rack is placed down onto a suitable snap tang on the holder in the vertical direction. Any mechanism which would move the tip racks from the stacker to the storage location would need be able to negotiate these snaps.

Another limiting factor in a laboratory setting is the availability of space, which is in short supply in most laboratory settings. It would therefore be useful to have a mechanism for efficiently storing and staging labware or samples for use by a laboratory instrument. It would also be useful if the mechanism were suitable for use with automated laboratory instruments, permitting the user to set up the instrument and apparatus with no need for further attention until the end of processes to be performed.

US6808304 B2 and US2012/295358 A1 disclose prior art apparatuses.

### SUMMARY OF THE INVENTION

The present invention is defined by a laboratory apparatus according to claim 1 and the corresponding method according to claim 13. The present invention provides a laboratory apparatus that contains an advancing conveyor for storing and delivering containers of disposable labware or samples for use by an associated laboratory instrument. The apparatus can accept sample containers or disposal labware in the packaging configuration provided by the manufacturer. The apparatus can translate a substantial length of the instrument and deliver containers of labware or samples to an opening under the main deck or work area of the associated laboratory instrument. Once depleted the empty containers can be removed by a gantry or robotic arm, the apparatus advance, and a new set of containers presented at the opening. Since the main decks of laboratory instruments are already fully populated with necessary components the present invention can greatly increase the amount of disposable labware or samples available to the instrument with no impact on the instrument footprint.

The apparatus can also have a lead out groove that permits the free movement and clearance of the plurality of supports or beams around the exterior diameter of the pulley and frame side, and permits the plurality of supports or beams to pass from the top portion of the timing belt to the bottom portion of the timing belt.

In any embodiment the laboratory apparatus can be present underneath an associated laboratory instrument. In one embodiment the apparatus is present in a drawer. In one embodiment the plurality of supports or beams can be configured (or sized and shaped) to hold a labware container or sample container in between two rows of beams. The first and second axles can be positioned substantially perpendicular to the first and second set of at least two pulleys. The plurality of supports or beams can be reversibly affixed to the timing belt.

In one embodiment the laboratory apparatus can also have a work deck. The work deck can be a generally flat surface and the apparatus can be provided in a drawer underneath the work deck. The drawer can be configured or sized and shaped to be opened to provide access to the apparatus. The work access position can present at least one support for labware at an opening 308 in the work deck, to permit access of a gantry or robotic arm to at least one support in a second set position or work access position. The plurality of supports or beams can be affixed to and spaced along the first and second timing belts so that one or more of the containers fit in a holding space between two supports or beams and are held securely thereby. The supports or beams can be affixed to the timing belts via cleats, and the cleats comprise a slot or protrusion that engages with the timing belts.

In one embodiment the timing belts can be separated by a distance that is approximately the width of the support beams. The labware can be pipette tips and the one or more labware containers can each have 96 or 384 pipette tips. The laboratory apparatus can have a capacity of at least 960 pipette tips or ten labware containers.

According to the invention a guide rail in the form of a groove is situated on the internal side of at least one frame bar. The at least one axle can be translationally connected to the power source. In any embodiment the labware consumables can be pipette tips and/or samples to be analyzed (e.g., chemically or biologically). The plurality of beams can be spaced to so that a container of labware consumables or samples can be held between two supports. In one embodiment the plurality of supports or beams can provide at least two holding spaces. The laboratory apparatus can also have a gantry or robotic arm for removing containers from the one or more supports. And the power source of the laboratory apparatus can be a motor. In one embodiment of the laboratory apparatus the opening in the work deck can provide space for an interface with an associated laboratory instrument. The laboratory apparatus can be contained underneath an associated laboratory instrument, e.g., in a drawer.

### DETAILED DESCRIPTION OF THE DRAWINGS

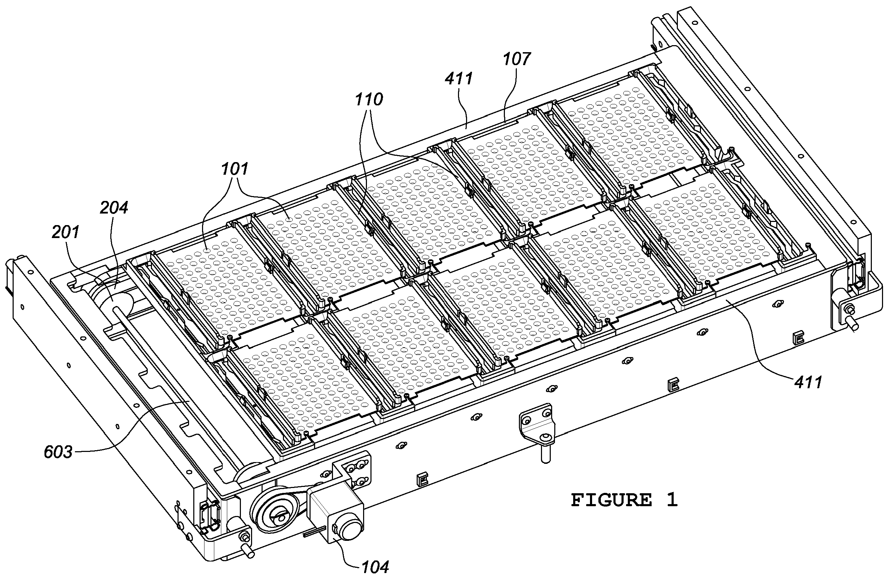

Figure 1 provides a schematic drawing of an apparatus of the invention. Depicted are the containers 101, pulleys 201, supports 110, and guide rails 107, comprised within frame bars 411.

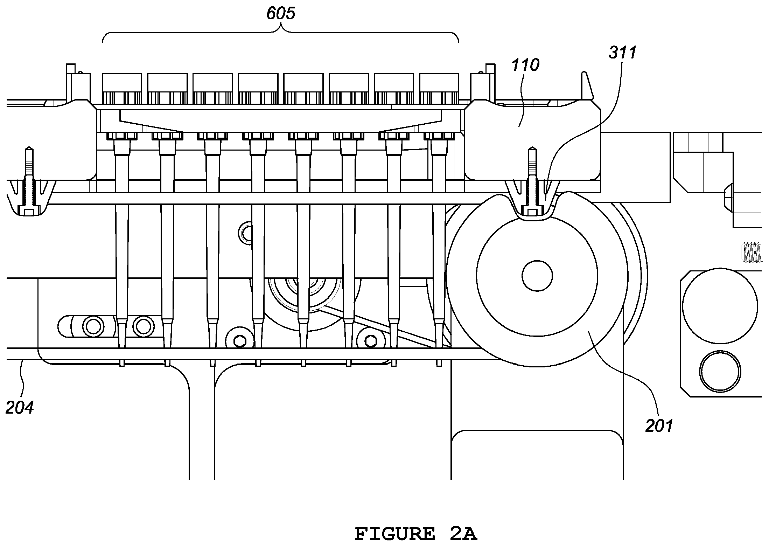

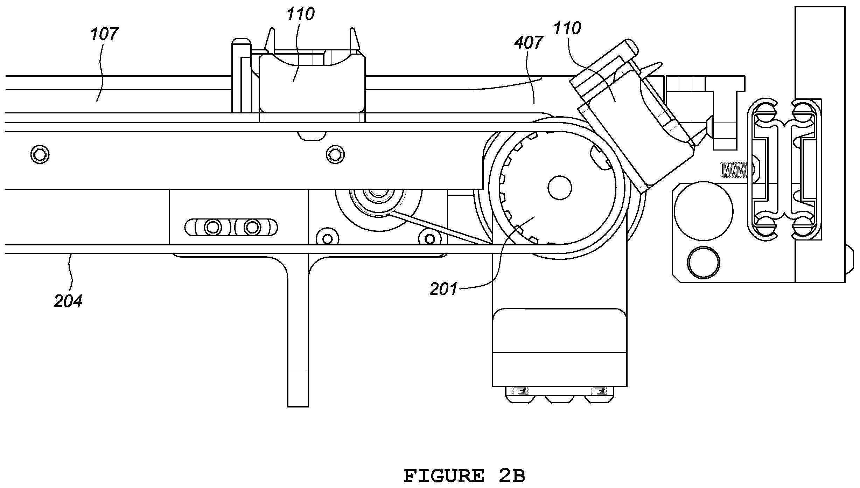

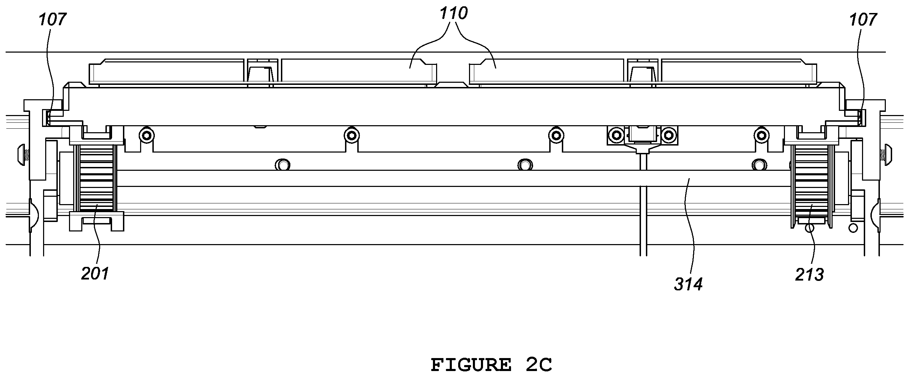

Figures 2A-2C. Figure 2A provides a close-up schematic view of an aspect of the apparatus, featuring a pulley 201, timing belt 204, and supports 110 with cleats 311. The apparatus is depicted as being filled with containers of labware consumables, in this embodiment pipette tips 209. Figure 2B provides a similar view as Figure 2A, but illustrates the supports 110 after passing through the lead out groove 407 and being expelled. Figure 2C provides a side view of the apparatus, illustrating a first pulley of a first set 201 (without timing belt attached), a first pulley of a second set 213, supports 110, an axle 314, and guide rails 107.

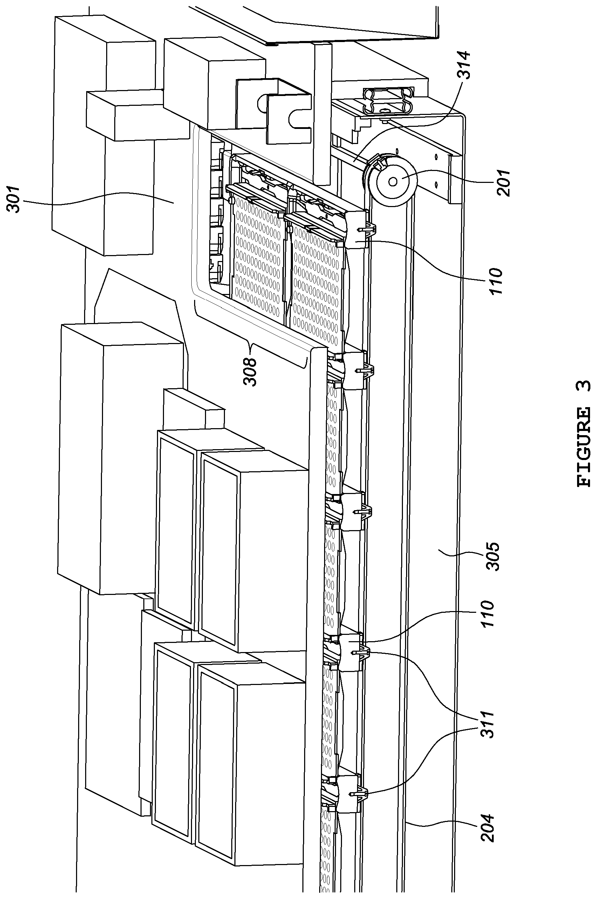

Figure 3 provides a schematic view of the apparatus illustrating the work deck 301, opening 308 in the work deck, pulley 201, supports 110, cleats 311 for affixing the support to the timing belt 204, and axle 314. The apparatus is depicted present in a drawer 305 underneath the associated laboratory instrument.

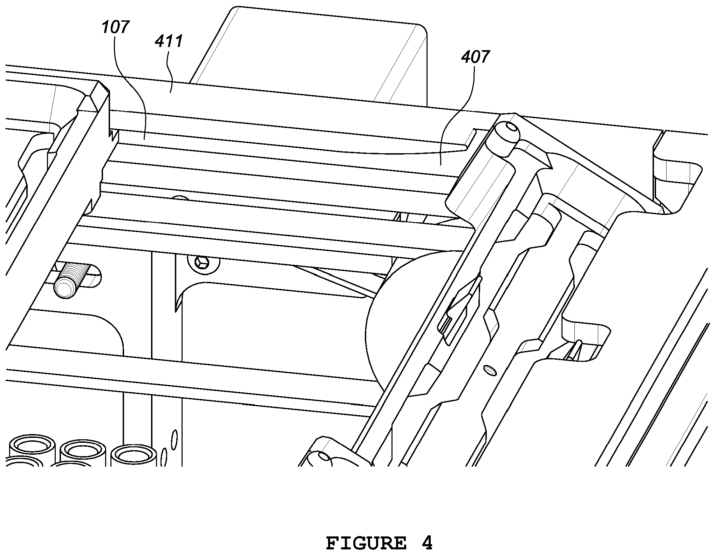

Figure 4 provides a schematic close-up view of the apparatus featuring the guide rails 107, lead out groove 407, and frame side 411. The support 110 is in the process of being expelled.

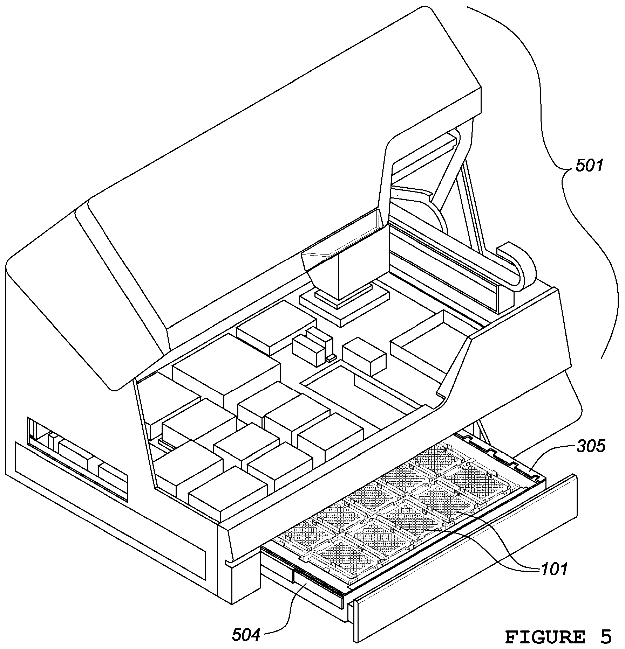

Figure 5 provides a schematic drawing of an associated laboratory instrument 501 with a drawer 305 provided in the housing (depicted in the open configuration), in which is present an apparatus of the invention. Also depicted is the drawer slide 504. The apparatus (in the drawer) is depicted as loaded with labware containers 101.

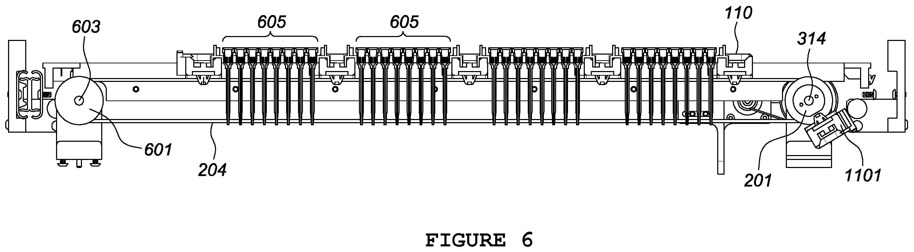

Figure 6 provides a cross-sectional view of an apparatus of the invention. The drawing illustrates a first pulley 201 of a first set of pulleys, and a second pulley 601 of the first set of pulleys. The pulleys are connected by a timing belt 204. Also shown is the ends of the axles 314 that connect the first set of pulleys to a second set of pulleys, a support 110, and a support being expelled 1101. Containers of pipette tips **605** are visible loaded into the apparatus.

### DETAILED DESCRIPTION OF THE INVENTION

The laboratory apparatus of the invention offers advantages over previously available systems. Laboratory instruments use large amounts of samples or disposable labware, for example pipette tips and other labware consumables used in carrying out processes. In the case of disposable labware these products are typically used only once and then either disposed of or recycled. The apparatus can increase the available space on the work deck of the instrument by providing a separate space (e.g., underneath the work deck) for convenient storage and access to disposable labware or samples. The apparatus can accommodate the containers of samples or disposable labware in the same packaging as it is provided in by the manufacturer or laboratory, thus eliminating inconveniences and inefficiencies that result from loading disposable labware from packaging that requires inefficient steps to obtain access to and load onto the instrument. Thus, the operator can load the supports of the apparatus with disposable labware in the container provided by the supplier and thereby provide a large quantity of labware that can be used by the instrument without a need for further operator activity. This therefore enables the operator to perform procedures overnight or over a period of days without needing to be present or perform further activities towards operation of the instrument.

The labware or samples can be installed in and utilized by the apparatus in the containers provided by commercial suppliers and can be affixed to or immobilized on or between one or more supports in said same containers. The supports can be present on a conveyor for motional translation or movement of the supports (and containers) from a first set position to a second set position (which can be a work access position). Motional translation refers to the movement from one location to another. A set position can be a stopping point where movement of the conveyor is stopped for activity, e.g., a work access position where labware can be accessed.

The instrument can also, optionally, have a gantry or robotic arm (not depicted) for removing containers 101 from the holding spaces between the one or more supports 110. Because the plurality of supports or beams are sized, shaped, and configured in a simple and flexible manner that can accommodate a variety of specific shapes (e.g., as beams), the labware can be placed onto the apparatus in the same container it is provided in by the manufacturer, thus simplifying and speeding loading of labware. When the container(s) are in the work access position the gantry or robotic arm has access to at least one container. The apparatus can also, optionally, have a detector for detecting when a container is empty or mostly empty, or when the container at the work access position is empty or mostly empty. The gantry or robotic arm can be mechanically or electronically connected to the apparatus.

The apparatus of the invention is used with an associated laboratory instrument 501. The associated laboratory instrument can be any laboratory instrument that uses labware consumables or samples to be analyzed and with which the apparatus of the invention can be configured to provide labware consumables or samples. For example, any laboratory instrument that uses pipette tips, or other labware consumables (e.g., pipette tips, vials, tubes, caps, etc.), or that will analyze or utilize samples of any type in a chemical or biological process. In any embodiment the associated laboratory instrument can be present in a housing, which optionally can contain a drawer or compartment for containing the apparatus of the invention. The drawer or compartment can be configured to accommodate the apparatus and allow easy access to and loading of labware consumables (e.g., by the incorporation of openings in the drawer or housing of the instrument). In any embodiment the apparatus and its components can be fully contained within the drawer. As used herein "drawer" is used in the conventional sense known to those of ordinary skill in the art, generally meaning a container (e.g., a box) without a lid (e.g., having 4 or 5 sides) that slides in and out (e.g., horizontally) of a housing (e.g., an instrument housing). In one embodiment the drawer can be pulled out of the housing of the associated laboratory instrument to permit access to the apparatus and re-filling with labware or sample containers. Another advantage of the apparatus of the invention is the ability of an operator to have access to all positions in the apparatus simultaneously upon opening the drawer or other compartment in which it is stored.

### Support

In one embodiment the invention has one or more supports 110 for holding containers of labware consumables or chemical or biological samples. The one or more supports can hold the labware consumables or samples in a first set position. In any embodiment the one or more support can be a plurality of beams or bars (e.g., the beams 110 depicted in Fig 1), or any support structure onto which a container of labware consumables or samples can be affixed or immobilized. In one embodiment the apparatus has one, two, or more than two supports, beams, or bars present (e.g., end to end) across the internal width of the frame sides 411 and configured so that the end(s) of the supports, beams, or bars are mated with or fit into guide rails on the internal sides of at least one frame side 411 and are thereby secured for stable movement along the conveyor. The "frame side" refers to one, or two, or more than two sides of the apparatus on either side of the support or beams (or bars), and optionally at the ends of the apparatus e.g., as depicted in Figure 1. In different embodiments the apparatus can have at least one frame side or two frame sides, or three, or four or more. The frame side can contain or support the guide rail 107. The "frame side" can be made of more than one piece or unit, thus in some embodiments the outside or exterior side of the frame can be made of one piece of material while the inside of the frame (e.g., an inside of a frame side containing the guide rail 107) can be made of another piece or unit of material.

When two or more beams or bars are utilized in a row of beams or bars (which together can cross the apparatus from one section of frame side to another) they can have interlocking mechanisms (e.g., at one or both of their ends) to maintain them as a unit, and facilitate movement together from a first set position to a second set position. The beams or bars can be spaced apart from another set of beams or bars so that a container can be securely held between two beams or bars (e.g., as depicted in Figure 1). The space between the beams or bars is a "holding space" where containers can be securely held in such embodiments where beams or bars are utilized. The beams or bars have the advantages as supports of being low cost, as well as being configured narrow enough so that they can be easily maneuvered around the pulley to the underside of the apparatus. But in other embodiments the supports can hold the containers on the support itself (e.g., on a single support), and the holding space is defined by the space in which the support holds the container.

### Frame and guide rail

According to the invention the apparatus has a frame or frame sides to provide a boundary or guide for the one or more support. The frame sides 411 have at least one guide rail **107,** for example in the form of a groove or sliding groove, and an end or part of the support(s) (or part extending from the support(s)) can fit into and interact with, and be slided within the guide rail, which stably guides the one or more supports as it stably moves from a first set position to a second set position. In one embodiment the one or more supports can contain a tab or extension that fits into the guide rail **107** and have dimensions so that the support is stabilized or locked into the groove. But the guide rail can be configured in any structure that stabilizes and/or "guides" the supports or beams as they move or slide to and/or from the opening **308** where labware is accessed (e.g., in nonlimiting examples the guide rail can comprise a groove, or a raised portion of the frame side **411** relative to the guide rail or support. Any of these structure(s) can be a structure below the support(s) (relative to the floor) when the support(s) are on the top portion of the timing belt or chain. In one embodiment the guide rail or frame can also have a lead out groove **407** or other structure that permits the support(s) the clearance to navigate around the pulley. The configuration of the lead out groove can depend upon the structure of the support(s) or beams **110** and/or labware containers **101.** When the at least one support or beam advances at least one position from the work access position, the support can be guided through the lead out groove and the lead out groove provides sufficient clearance so that the support(s) can rotate around the pulley while still connected to the timing belt, and thus be processed from the top of the conveyor to the bottom of the conveyor or apparatus. The supports or beams can again navigate the rotation of the second pulley **601** in the first set of pulleys to again be present on the top of the apparatus, and there be re-filled by the operator with new labware or samples (e.g., by opening the drawer, when present). The lead out groove **407** can be open at the top or contain another structure to otherwise be configured to provide sufficient clearance for the supports to navigate and rotate around the pulley **201** to the underside of the apparatus. In other embodiments and alternatively the lead out groove can be sized and shaped around the pulleys to guide the supports around the pulleys to the underside of the apparatus (e.g., along a groove or track), where they can then exit the structure. The top of the conveyor is the portion where the work access position is accessed and located, and where supports can be filled with containers. The empty container seated on the support(s) can optionally be retrieved by a mechanical gripper or robotic hand and expelled into a waste bin after the labware or samples have been removed from the container. Thus, the lead out groove **407** permits the apparatus to function in a continuous manner. Containers of labware or samples can be re-filled as the supports appear at the top of the apparatus, and can be used in subsequent procedures. The operator can load new labware or samples into the supports, and thus operate the associated laboratory instrument continuously. In some embodiments new labware or samples can be loaded onto the supports by opening the drawer **305** and accessing the one or more supports or beams and loading labware or sample containers.

In the embodiment depicted in the Figures the guide rail **107** has a "lead out groove" **407** that provides space via a broadening in the rail or groove towards the end so that the supports or beams can navigate to the underside of the apparatus by clearing the side of the apparatus, i.e., from the top portion of the timing belt or chain to the bottom portion. The lead out groove can provide clearance space to permit the tipping of the support or beam as it navigates around the pulley. Thus, the lead out groove **407** or other structure permits the free movement of the beam around the exterior diameter of the pulley **201** and permits the support(s) or beam(s) to pass from the top portion of the timing belt to the bottom portion of the timing belt. Thus, the lead out groove **407** or other structure provides clearance space so that the trailing portion of a support or beam can clear the frame or side of the apparatus or drawer as it rotates around the pulley. The lead out groove **407** can also be configured to raise or lift the support or beam as it passes through this portion of the apparatus, thus facilitating its rotation around the pulley. Since the support or beam is secured into the guide rail the curvature in the lead out groove can pull the support upwards and stretch the timing belt or chain. In some embodiments the support or beam can detach from the guide rail as it rotates around the pulley.

In any embodiment one or more beams or bars can be present across the internal width of the frame of the apparatus, and the ends of the beam(s) or bar(s) can fit into one or two guide rail(s) 107 on the sides of the frame of the apparatus. The guide rails 107 can be present on the internal or external side of the frame side(s) 411. Each beam or bar in a row can be spaced apart from another beam or bar in an adjacent row to create a holding space between them so that a container can be securely held between the support beams or bars 110. In some embodiments the beams or bars (or other type of support) can have structures (e.g., snaps, ridges, nibs, or protrusions) that facilitate holding the container in the holding space provided between two beams or bars. The structures can facilitate placement of the container onto the support or into the holding space.

The term "pulley" as known to those of ordinary skill in the art generally comprises a wheel with a (optionally grooved) rim around which a belt or chain passes and acts to change the direction of force applied to the belt or chain 204. In one embodiment the timing belt or chain is oriented on the pulleys so that it is substantially horizontal on the apparatus during operation, e.g. at least 2x or 4x or 5x or 7x or 8x the length of the belt or chain on the pulleys is in the horizontal orientation (substantially parallel to the floor) versus the length of the belt or chain in the vertical direction. But in other embodiments components can be arranged so that the timing belt is not horizontal. In some embodiments the pulley can have teeth into which teeth from the timing belt can fit and be secured.

In any embodiment the one or more supports can be "beams or bars," which are generally cylindrical, elongated, or rectangular in shape, and are sized and shaped so that at least one container can be placed in between two rows of them and be held securely. The beams or bars are sized and shaped so they can clear the side of the apparatus while rotating around the pulleys and moving from the top of the timing belt to the bottom of the timing belt. They can also be configured to contain ridges or protrusions that facilitate the secure holding of a container. Ridges or protrusions can be designed to interact with specific structures on the labware or sample containers as they are provided by the manufacturer. The ridges or protrusions can also mate with the same on the containers to be loaded into the apparatus. In various embodiments the apparatus can have a plurality of beams or bars. In various embodiments the beams can be less than 3 inches in width, or less than 2 inches in width, or less than 1 inch. The beams or bars can be of any convenient length, e.g., less than 20 inches, or less than 10 inches, or less than 8 inches or 6-10 inches, or any suitable length. In various embodiments the apparatus can have 4, 5, 6, 7, 8, 9, 10, 11, 12, 13, 14, 15, 16, 20, 22, 24 or more than 24 beams or bars. Six beams can create five holding spaces in which to secure five containers of labware or samples, or twelve beams or bars can create ten holding spaces that can secure ten containers if configured with two in a row, e.g., as illustrated in Figure 1. A "row" of beam(s) or bar(s) refers to the spatial arrangement of one or more beams or bars across the apparatus (e.g., perpendicular to the timing belts or frame sides of the apparatus, e.g. as illustrated in the Figures). In one embodiment two containers can be secured in a row as depicted in Figure 1. But in other embodiments three or four or more than four containers can be secured in a row containing one or more supports.

The holding space between the supports can be provided by affixing and spacing the supports along the one or two timing belts or chains so that one or more containers fit in a holding space between the supports and are held securely thereby. The term "timing belt" includes both a belt or chain. A belt can be a continuous band of material for transferring motion from one wheel (or pulley) to another. A chain may comprise a series of links but performs the same function as a belt in a similar way and achieves a similar result. In embodiments with two or more timing belts 204 or chains they can be separated by a distance that is approximately the width of the support beams 110 or bars in a row, or slightly less than such width so that the supports can be held securely to the timing belts or chains in at least two locations. In different embodiments the holdings spaces can accommodate two or more containers held by supports on each side. In one embodiment a row of supports has two beams 110 or bars arranged next to each other (e.g., as depicted in Figure 1), but in other embodiments a row can have one, two, or more than two support beams or bars. Thus, the holding space can be present between and created by two rows of supports. A holding space can accommodate at least one container. In one embodiment two adjacent rows can accommodate two containers in the holding spaces between the supports (e.g., as depicted in Figure 1). In one embodiment the operator can verify that the container is properly in the holding space by the container snapping into place and being securely held in the holding space.

In some embodiments the support can be a structure onto which the disposable labware or sample container is fitted and held. In any embodiment the supports can have a shape that is complementary to the shape of the container or become a shape complementary to the container), so that the container fits onto and/or is held in place by at least one support. In such embodiments the container can also snap into place on a structure(s) that facilitate(s) holding the container, as above (e.g., snaps, ridges, nibs, protrusions, or other structures). In any embodiment the at least one support can be made of any suitable material, for example, plastic, metal, ceramic, or another material.

The plurality of supports 110 can be connected to the conveyor, for example to the timing belt 204 or timing chain, and move with it, e.g., translationally. The apparatus also can have a motor or power source 104 for translationally moving and advancing the conveyor from a first set position to a second set position or work access position. For example, the motor can be configured with at least one axle so that power from the motor turns the axle, which propels the conveyor.

In one embodiment the supports 110 can be either permanently (or reversibly) affixed to the timing belt 204 or timing chain, e.g., by cleats 311, clamps, or another structure that affixes or holds the support(s) to the timing belt(s) or chain(s). The cleats 311 can have a slot, clamp, or protrusion that allows the support(s) to be affixed. The cleats can be affixed by any reasonable mechanism, e.g., by a slot through the cleat that the timing belt or chain can fit into, or by mechanical fixation such as a clamp, nut and bolt, or other fastener. In one embodiment the cleats can be reversibly affixed so that they can be disengaged from the timing belt or chain at an appropriate step in the operation of the apparatus.

In one embodiment the apparatus has two timing belts or timing chains that can be present in a substantially parallel arrangement (e.g., parallel to each other and extending in the same direction, e.g., as depicted in Figure 2c), and each timing belt or chain can be engaged between a set of one, two, three, or more than three pulleys 201 or pairs of pulleys.

In one embodiment the plurality of supports 110 can be affixed or connected to one or two (or more than two) timing belts or timing chains. Each timing belt or chain can be in contact with and rotationally or translationally connected to two or more pulleys in a set. Thus, as the pulleys 201 are rotated the timing belt 204 or chain moves translationally, and consequently so do the one or more supports. Figure 1 shows an example of the one or more supports 110 across a pair of timing belts or timing chains. In any embodiment the one or more supports 110 can be in substantially perpendicular arrangement to the one, or two or more timing belts or chains.

### Containers

The laboratory apparatus of the invention can be used for the storage and delivery of containers 101, which can contain labware (e.g., disposable labware) or analytical samples. In one embodiment the containers contain labware consumables, e.g., pipette tips, other disposable labware, or sample plates. But in other embodiments the containers can contain samples to be analyzed. By "disposable labware" or "labware consumables" is meant labware that is typically used a single time and not re-used, e.g., either not re-used at all or not re-used until cleaned in preparation for a subsequent use.

In various embodiments the containers contain pipette tips. The containers can contain any suitable number of pipette tips but will usually contain tips in packaging as provided by the manufacturer. In some embodiments the containers can contain 96 or 384 pipette tips, as they are usually provided by manufacturers. In one embodiment the apparatus can have a capacity of 960 pipette tips, or at least 960 pipette tips. In various embodiments the apparatus can have a capacity of six or eight or ten or twelve or more than twelve containers.

### Conveyor

The apparatus of the invention has a conveyor for motional translation of the one or more supports from a first set position to a second set position. Motional translation refers to the movement or displacement of the one or more supports from one position to another.

The conveyor can comprise one or more pulleys 201. The conveyor can have a set of at least two pulleys or at least four pulleys or at least six pulleys, or any suitable number of pulleys, that are rotationally connected by a timing belt 204 or timing chain, or by more than one timing belt or timing chain. Rotationally connected refers to a connection of rotational movement, thus as one pulley in a set is rotated the other pulley(s) in the set also rotate(s). The pulleys can rotate in step or in synchrony with one another. Thus, when one pulley is rotated in response to power applied by the power source a second pulley (if present) is also rotated. Rotation of the pulley(s) causes the timing belt or timing chain to advance (and advance the supports) from a first set position to a second set position, e.g., as provided by software programming instructions. The conveyor can have a first set of at least two pulleys, and a second set of at least two pulleys. Each pulley in a set can be in contact with a timing belt or timing chain that is also in contact with the other pulley(s) in the set. Thus, pulleys of a set can be connected by the same timing belt or chain. Thus, a first set of pulleys can be connected by a first timing belt or chain, and a second set of pulleys can be connected by a second timing belt or chain. This action causes translational movement of the supports from a first set position to a second set position.

The timing belt (or chain) can thus pass around two pulleys in a set. The timing belt can have a top portion, which is the portion on which the beams and containers travel towards the opening 308 and are present after having been emptied of labware or samples; and a bottom portion, which in some embodiments is the portion where the beams travel away from the opening 308. The top portion of the timing belt (or chain) can be the portion of the belt or chain containing filled labware or sample containers during operation, and the side or portion from which labware or samples are accessed by the associated laboratory instrument or gantry (when present). The top portion can be the side that faces upwards, or towards the associated laboratory instrument. The bottom portion of the timing belt or chain can be that portion containing empty labware or sample containers, and will generally face downwards (or towards the floor). The pulleys in a set can be connected to pulleys in a second set, for example by an axle. Thus, rotation of the axle causes rotation of the pulleys, and consequent translational movement of the timing belts or chains and containers.

### Positions

The conveyor can have a plurality of positions that it can be moved to and held in. The first set position, second set position, etc. are terms used arbitrarily and abstractly to describe a position or location relative to another position or location. Thus, any position can be labeled as the "first set position," and the second set position can be the position the container moves to subsequent to the first set position, etc. The "work access" position is the position from which the associated laboratory instrument can access and receive the labware or samples. In the work access position at least one container is presented at the opening 308 in the work deck 301, thereby permitting access of a gantry or robotic arm to the at least one container in the work access position. The opening 308 in the work deck 301 can provide an interface with an associated laboratory instrument. In one embodiment the robotic arm will load a pipette with pipette tips from the work access position. The apparatus can have one (or more than one) work access position and/or one (or more than one) opening 308. The "work deck" 301 is a surface on which materials of the associated laboratory instrument may be present and/or where the instrument's activities may be conducted. The materials can include, for example, mechanical hardware and reagents. The work deck can be a generally flat surface on which mechanical hardware is affixed, and/or can have containers containing reagents. The apparatus of the invention can be situated below the work deck 301, but in various other embodiments can be located above it or even to the side. In any embodiment the first position, second position, or work access position can be locked into or otherwise held in a particular location in which activities are performed. This can ensure that in all positions of the conveyor at least one support is presented at the opening 308 and is in the work access position.

In one embodiment the robotic arm or gantry is a part of the apparatus. But in other embodiments the robotic arm or gantry can be a part of the associated laboratory instrument or can be a separate instrument itself. When the robotic arm or gantry is a component of the apparatus of the invention it can be secured to any suitable place from which it can perform its functions. A robotic arm or gantry can be used to retrieve and deliver labware, samples, or reagents utilized on the associated laboratory instrument, e.g., through the action of pipetting, or in the processing of samples. The robotic arm or gantry can therefore utilize large amounts of disposable labware (e.g., pipette tips or samples), which must be replaced in between performing procedures. The robotic arm or gantry can thus expel used labware (or empty labware containers) and/or re-charge new labware (or new labware containers) before performing the next step in a procedure. The robotic arm or gantry thus can align itself with the container of new labware and press itself into the labware to secure the new labware into position.

In one embodiment the apparatus of the invention can be comprised in a drawer 305 or space underneath, above, or adjacent to the work deck of the associated instrument, e.g., within 1 foot, or 2 feet or 3 feet of the work deck. The drawer 305 can be configured to open and thereby provide access to the apparatus (e.g., for loading the apparatus with labware or sample containers). In one embodiment the drawer can be lockable into the open position (e.g. can require a key or physical action by the operator in order to close). The drawer can be comprised as part of the apparatus (or the apparatus and drawer affixed to one another) or can be comprised as part of the associated laboratory instrument. In one embodiment the drawer can be contained in a housing of the associated laboratory instrument. In one embodiment the drawer is retractable, meaning it can be pulled away from the housing of the associated laboratory instrument (e.g., pulled away by at least 6 inches or at least 10 inches or at least 12 inches). In any embodiment the drawer can be present on a drawer slide 504 (or drawer glide), dado with a runner, or other hardware allowing the drawer to be pulled away from the associated instrument to expose and permit loading or inspection of the apparatus. Many types of drawer slides are known in the art.

### Power Source

The apparatus of the invention can also have a power source **104** for driving the conveyor. The power source **104** can be a motor that turns at least one axle **314** in the apparatus. Either (or both) axle(s) can be configured to be driven by the power source. The axle **314** can be connected to at least one pulley **201,** and thereby provide the motive force for rotational movement of the at least one pulley and movement of the timing belts and thus conveyor from a first set position to a second set position. Thus the at least one axle **314** can be translationally connected to the power source (e.g., through gear mechanisms). In one embodiment the apparatus has a first and second axle **314.**

In one embodiment the apparatus has a first set of at least two pulleys 201, and a second set of at least two pulleys. The two sets of pulleys can each be configured with their own timing belt 204 or timing chain - a first timing belt or chain and a second timing belt or chain. The first pulley in the first set (e.g., 201) can be connected to the first pulley in the second set (e.g., 213) by an axle 314. The second pulley in the first set (e.g., 601) can also be connected to the second pulley in the second set (not shown) by a second axle (e.g., 603). The axles can be arranged in a substantially perpendicular arrangement to the sets of pulleys and timing belts or chains. The two sets of pulleys can be arranged in a substantially parallel arrangement and separated by the length of the two axles, i.e., so that the timing belts or chains are substantially parallel. The axles can have a length shorter than the width of the apparatus so that the pulleys and timing belts can move freely and be accommodated within the width of the apparatus. The timing belts or chains can therefore drive the conveyor forward in response to rotational force applied (directly or indirectly) on at least one axle by the power source. Thus, in any embodiment the apparatus can have two (or more) sets of two pulleys, two (or more) axles, and two (or more) timing belts or chains. Figure 6 illustrates an embodiment having a first pulley 201 (in a first set) and a second pulley 601 (in a first set) forming a first set of pulleys, and being connected by a timing belt 204 situated around the first set of pulleys. The first pulley is connected to a first pulley in a second set (not shown) by a first axle 314, and the second pulley in the first set 601 is connected to a second pulley in a second set (not shown) by a second axle 603 (603 illustrates the second axle from the side). The second set of pulleys can thus be present on the opposite side of the apparatus.

In various embodiments the length of the axles can be less than 20 inches in length, or less than 17 inches, or less than 15 inches, or any suitable length. The length between the first and second set of pulleys can be approximately the length of the one or more supports. In one embodiment the supports mate with or interact with a guide rail 107 in a frame side 411.

### Methods

The invention provides methods of storing and delivering labware consumables or samples to a laboratory instrument. The methods involve providing a laboratory apparatus described herein having at least one container of labware consumables or samples in at least one of a plurality of supports or holding spaces. The method can involve one or more steps of utilizing at least a portion of the labware consumables or sample(s) in the at least one container, advancing the apparatus from a first set position to a second set position so that new labware consumables are presented at the opening in the work deck. The advancing can be done in an automated step.

In other embodiments the methods involve providing an apparatus as described herein, loading the apparatus with samples or labware (e.g., pipette tips), and initiating a procedure on an associated laboratory instrument. The apparatus provides samples or labware to the associated laboratory instrument. In any of the embodiments the methods can also involve a step of accessing the apparatus by opening a drawer, and preparing the apparatus by closing the drawer.

In any embodiment the apparatus can perform the steps of any of the methods disclosed herein in an automated method. An automated method is one where no human intervention is necessary after the method is initiated - the method goes to completion from that point without a human having to perform any action with regard to the provision of disposable labware or samples. Human intervention is any action taken by a person to move the method to completion including, but not limited to, refilling containers of disposable labware or samples, or any action taken to advance the set position of the apparatus. In one embodiment the method involves providing six, or up to six, or eight, or up to eight, or ten, or up to ten, or more than ten containers of labware to an associated laboratory instrument in an automated method.

### Software

The apparatus of the invention can have software programming instructions present on a non-transitory computer-readable medium. The non-transitory computer readable medium can also contain programmed instructions and/or steps for detecting when the containers at the opening 308 (in the work access position) or at another location on the apparatus are empty, and can then advance the conveyor from a first set position to a second set position to provide containers having unused labware or unanalyzed samples at the opening 308. In one embodiment the software detects the empty container(s) by receiving a signal that the associated laboratory instrument has retrieved disposable labware or samples. In one embodiment the software programming instructions can be on a non-transitory computer readable medium on the associated laboratory instrument. The apparatus can also have a software interface with the associated laboratory instrument so that the apparatus and instrument can communicate information related to the status and location of the containers, or other information related to the methods. In any embodiment, whether provided as part of the apparatus or the associated laboratory instrument, the non-transitory computer readable medium can be connected to and control or direct the apparatus to perform steps in a method disclosed herein (e.g., connected by hard wiring, by a wireless or remote electronic connection, or via an internet connection). The programmed instructions and/or steps can be provided to the apparatus in communication with the computer-readable medium. In one embodiment the software programming instructions can be received by the apparatus (or by the associated laboratory instrument) through the internet. In any embodiment the apparatus can be provided as a component of an associated laboratory instrument, and the programmed instructions or steps can direct the associated laboratory instrument to perform the assembly of a DNA molecule of pre-defined sequence, and/or to perform any of the methods provided herein.

### Example 1

An apparatus of the invention was provided, substantially as the embodiment depicted in the Figures, and having the same features. In this embodiment the apparatus had ten holding spaces provided by six rows, each row having two support beams 110, as depicted in Figure 1.

The containers contained disposable pipette tips in packaging provided by the manufacturer. The containers each held 96 pipette tips. The associated laboratory instrument was a BioXp^{™} unit (Telesis Bio, Inc., San Diego, CA) for synthesizing DNA molecules. This instrument consumes large quantities of pipette tips in conducting its procedures and features a robotic arm having a pipettor, which was pressed into the pipette tips for retrieval of new pipette tips.

The apparatus was present in a drawer underneath the laboratory instrument. The drawer was opened to reveal the empty apparatus and containers of pipette tips were loaded in their original packaging into the holding spaces provided by the support beams. After loading the drawer was closed. Thus, two full containers of pipette tips were presented at the opening in the work deck and in the work access position. The procedure was initiated.

The associated laboratory instrument retrieved clean pipette tips from the containers in the work access position using a robotic arm configured with a multi-channel pipette. The multi-channel pipettor had 96 channels for suctioning and dispensing a fluid. The multi-channel pipette was directed by the software programming instructions to be lowered through the opening and into a container having 96 pipette tips in the same configuration as the multi-channel pipette. The pipette was pressed into the clean pipette tips, thereby loading the multi-channel pipette with 96 pipette tips.

The software then directed the robotic arm to withdraw and to perform biochemical steps on the laboratory instrument as directed by the software programming instructions. Since two containers of clean pipette tips were presented at the work access position the instrument was able to refill the pipette with clean tips an additional time. After the retrieval of all pipette tips from the work access position the software programming instructions directed the apparatus to advance one row. The apparatus thus moved from a first set position to a second set position, advancing one row and moving two containers of clean pipette tips into the work access position so that they could be accessed by the associate laboratory instrument in the next cycle. The instrument also had a mechanical arm that removed the empty pipette tip containers from the work access position.

After suctioning and dispensing liquid as directed by the software programming instructions, and after disposing of the used pipette tips, the robotic arm was then lowered again through the opening to receive a set of clean pipette tips from the second container in the work access position. After the second set of clean pipette tips were utilized the software programming instructions directed the apparatus to advance one set position, thus presenting two additional containers of pipette tips at the work access position. The process continued until the programmed method was completed.

Although the invention has been described with reference to the presently preferred embodiment, it should be understood that various modifications can be made without departing from the scope of the claims. Accordingly, the invention is limited only by the following claims.

## Claims

1. A laboratory apparatus for the storage and delivery of samples or labware comprising:
a plurality of supports (110) for holding one or more containers of samples or labware consumables in a first set position;
a conveyor for motional translation of the plurality of supports from a first set position to a second set position, wherein the conveyor comprises a first pulley (201) in a first set of pulleys translationally connected by a first timing belt (204) to a second pulley in the first set of pulleys (601), and a first pulley in a second set of pulleys translationally connected by a second timing belt to a second pulley in the second set of pulleys;
wherein the first pulley (201) of the first set and the first pulley of the second set (601) are connected by a first axle (314), and the second pulley in the first set and the second pulley in the second set are connected by a second axle; wherein the plurality of supports (110) is affixed to the first and/or second timing belts and move translationally with the first and/or second timing belts;
a power source (104) for translationally advancing the conveyor from a first set position to a second set position or work access position;
wherein the supports are beams (110), and
at least one frame side (411) for guiding the plurality of supports (110) from a first set position to a second set position or work access position,
**characterised in that** a distal end of at least one beam is mated with a groove comprised in the at least one frame side (411); optionally further comprising a lead out groove (407) permitting the free movement of the plurality of supports around the exterior diameter of the pulley (201) and permitting the plurality of supports to pass from the top portion of the timing belt to the bottom portion of the timing belt.

2. The laboratory apparatus of claim 1 wherein the plurality of supports is configured to hold a labware container or sample container in between two rows of beams.

3. The laboratory apparatus of any one of claims 1-2 wherein the first and second axles are positioned substantially perpendicular to the first and second set of at least two pulleys.

4. The laboratory apparatus of any one of claims 1-3 wherein the plurality of supports is reversibly affixed to the timing belt.

5. The laboratory apparatus of any one of claims 1-4 further comprising a work deck (301), wherein the work deck (301) is a generally flat surface and the apparatus is provided in a drawer (305) underneath the work deck, optionally wherein the drawer (305) is configured to be opened thereby providing access to the apparatus.

6. The laboratory apparatus of any one of claims 1-5 wherein the work access position presents at least one support for labware at an opening (308) in the work deck, thereby permitting access of a gantry or robotic arm to at least one support in a second set position or work access position.

7. The laboratory apparatus of any one of claims 1-6 further comprising that the plurality of supports are affixed to and spaced along the first and second timing belts or chains so that one or more of the containers fit in a holding space between two supports and are held securely thereby; optionally wherein the supports are affixed to the timing belts via cleats (311), and the cleats comprise a slot or protrusion that engages with the timing belts.

8. The laboratory apparatus of any one of claims 1-7 wherein the labware comprises pipette tips and the one or more labware containers each comprise 96 or 384 pipette tips; or wherein the apparatus has a capacity of at least 960 pipette tips or ten labware containers.

9. The laboratory apparatus of any one of claims 1-8 wherein at least one axle (314) is translationally connected to the power source; or wherein the labware consumables comprise pipette tips and/or samples.

10. The laboratory apparatus of any one of claims 1-9 wherein the plurality of supports are spaced so that a container of labware consumables or samples can be held between two supports; or wherein the plurality of beams provide at least two holding spaces.

11. The laboratory apparatus of any one of claims 1-10 wherein the power source is a motor (104); or wherein the work access position presents at least one support for labware at an opening (308) in the work deck, thereby permitting access of a gantry or robotic arm to at least one support in a second set position or work access position, wherein the opening (308) in the work deck (301) comprises an interface with an associated laboratory instrument.

12. The laboratory apparatus of any one of claims 1-11 wherein the laboratory apparatus is comprised underneath an associated laboratory instrument; or wherein the laboratory apparatus is comprised in a drawer.

13. A method of storing and delivering samples or labware comprising: providing a laboratory apparatus of any one of claims 1-12 comprising at least one container of labware consumables in at least one of the plurality of supports; optionally utilizing at least a portion of the labware consumables in the at least one container; advancing the conveyor from the first set position to the second set position.

14. A method of storing and delivering samples or labware comprising: providing a laboratory apparatus of claim 5 comprising at least one container of labware consumables in at least one of the plurality of supports; optionally utilizing at least a portion of the labware consumables in the at least one container; advancing the conveyor from the first set position to the second set position so that new labware consumables are presented at the opening in the work deck.

## Patentansprüche

1. Laborvorrichtung zur Lagerung und Abgabe von Proben oder Laborartikeln, die Folgendes umfasst:
mehrere Stützen (110) zum Halten eines oder mehrerer Behälter von Proben oder Laborartikel-Verbrauchsmaterialien in einer ersten Einstellposition;
einen Förderer zur Bewegungstranslation der mehreren Stützen von einer ersten Einstellposition in eine zweite Einstellposition, wobei der Förderer eine erste Riemenscheibe (201) in einem ersten Satz von Riemenscheiben umfasst, die translatorisch durch einen ersten Steuerriemen (204) mit einer zweiten Riemenscheibe in dem ersten Satz von Riemenscheiben (601) verbunden sind, und eine erste Riemenscheibe in einem zweiten Satz von Riemenscheiben, die translatorisch durch einen zweiten Steuerriemen mit einer zweiten Riemenscheibe in dem zweiten Satz von Riemenscheiben verbunden sind;
wobei die erste Riemenscheibe (201) des ersten Satzes und die erste Riemenscheibe des zweiten Satzes (601) durch eine erste Achse (314) verbunden sind und die zweite Riemenscheibe in dem ersten Satz und die zweite Riemenscheibe in dem zweiten Satz durch eine zweite Achse verbunden sind; wobei die mehreren Stützen (110) an dem ersten und/oder zweiten Steuerriemen befestigt sind und sich translatorisch mit dem ersten und/oder zweiten Steuerriemen bewegen;
eine Kraftquelle (104) zum translatorischen Vorschieben des Förderers von einer ersten Einstellposition zu einer zweiten Einstellposition oder Arbeitszugangsposition;
wobei die Stützen Träger (110) sind, und
mindestens eine Rahmenseite (411) zum Führen der mehreren Stützen (110) von einer ersten Einstellposition zu einer zweiten Einstellposition oder Arbeitszugangsposition, **dadurch gekennzeichnet, dass** ein distales Ende mindestens eines Trägers mit einer Nut, die in der mindestens einen Rahmenseite (411) enthalten ist, gepaart ist;
optional ferner umfassend eine Herausführungsnut (407), die die freie Bewegung der mehreren Stützen um den Außendurchmesser der Riemenscheibe (201) ermöglicht und ermöglicht, dass die mehreren Stützen von dem oberen Abschnitt des Steuerriemens zu dem unteren Abschnitt des Steuerriemens verlaufen.

2. Laborvorrichtung nach Anspruch 1, wobei die mehreren Träger dazu konfiguriert sind, einen Laborartikelbehälter oder Probenbehälter zwischen zwei Reihen von Trägern zu halten.

3. Laborvorrichtung nach einem der Ansprüche 1-2, wobei die erste und die zweite Achse im Wesentlichen senkrecht zu dem ersten und dem zweiten Satz von mindestens zwei Riemenscheiben positioniert sind.

4. Laborvorrichtung nach einem der Ansprüche 1-3, wobei die mehreren Träger reversibel an dem Steuerriemen befestigt sind.

5. Laborvorrichtung nach einem der Ansprüche 1-4, ferner umfassend ein Arbeitsdeck (301), wobei das Arbeitsdeck (301) eine allgemein flache Oberfläche ist und die Vorrichtung in einer Schublade (305) unter dem Arbeitsdeck bereitgestellt ist, wobei optional die Schublade (305) dazu konfiguriert ist, geöffnet zu werden, wodurch Zugang zu der Vorrichtung bereitgestellt wird.

6. Laborvorrichtung nach einem der Ansprüche 1-5, wobei die Arbeitszugangsposition mindestens eine Stütze für Laborartikel an einer Öffnung (308) in dem Arbeitsdeck präsentiert, wodurch der Zugang einer Gantry oder eines Roboterarms zu mindestens einer Stütze in einer zweiten Einstellposition oder Arbeitszugangsposition ermöglicht wird.

7. Laborvorrichtung nach einem der Ansprüche 1-6, die ferner umfasst, dass die mehreren Stützen an dem/der ersten und dem zweiten Steuerriemen oder -kette befestigt sind und entlang diesem/dieser beabstandet sind, so dass einer oder mehrere der Behälter in einen Aufnahmeraum zwischen zwei Stützen passen und dadurch sicher gehalten werden; wobei optional die Stützen an den Steuerriemen über Stollen (311) befestigt sind und die Stollen einen Schlitz oder Vorsprung umfassen, der mit den Steuerriemen in Eingriff steht.

8. Laborvorrichtung nach einem der Ansprüche 1-7, wobei die Laborartikel Pipettenspitzen umfassen und der eine oder die mehreren Laborartikelartikelbehälter jeweils 96 oder 384 Pipettenspitzen umfassen; oder wobei die Vorrichtung eine Kapazität von mindestens 960 Pipettenspitzen oder zehn Laborartikelbehältern aufweist.

9. Laborvorrichtung nach einem der Ansprüche 1-8, wobei mindestens eine Achse (314) translatorisch mit der Kraftquelle verbunden ist; oder wobei die Laborartikel-Verbrauchsmaterialien Pipettenspitzen und/oder Proben umfassen.

10. Laborvorrichtung nach einem der Ansprüche 1-9, wobei die mehreren Träger so beabstandet sind, dass ein Behälter von Laborartikel-Verbrauchsmaterialien oder Proben zwischen zwei Trägern gehalten werden kann; oder wobei die mehreren Träger mindestens zwei Aufnahmeräume bereitstellen.

11. Laborvorrichtung nach einem der Ansprüche 1-10, wobei die Kraftquelle ein Motor (104) ist; oder wobei die Arbeitszugangsposition mindestens eine Stütze für Laborartikel an einer Öffnung (308) in dem Arbeitsdeck präsentiert, wodurch der Zugang einer Gantry oder eines Roboterarms zu mindestens einer Stütze in einer zweiten Einstellposition oder Arbeitszugangsposition ermöglicht wird, wobei die Öffnung (308) in dem Arbeitsdeck (301) eine Schnittstelle mit einem assoziierten Laborinstrument umfasst.

12. Laborvorrichtung nach einem der Ansprüche 1-11, wobei die Laborvorrichtung unter einem assoziierten Laborinstrument enthalten ist; oder wobei die Laborvorrichtung in einer Schublade enthalten ist.

13. Verfahren zum Lagern und Abgeben von Proben oder Laborartikeln, umfassend: Bereitstellen einer Laborvorrichtung nach einem der Ansprüche 1-12, die mindestens einen Behälter von Laborartikel-Verbrauchsmaterialien in mindestens einer der mehreren Stützen umfasst; optional Verwenden mindestens eines Teils der Laborartikel-Verbrauchsmaterialien in dem mindestens einen Behälter; Vorschieben des Förderers von der ersten Einstellposition zu der zweiten Einstellposition.

14. Verfahren zum Lagern und Abgeben von Proben oder Laborartikeln, umfassend: Bereitstellen einer Laborvorrichtung nach Anspruch 5, die mindestens einen Behälter von Laborgeschirr-Verbrauchsmaterialien in mindestens einer der mehreren Stützen umfasst; optional Verwenden mindestens eines Teils der Laborartikel-Verbrauchsmaterialien in dem mindestens einen Behälter; Vorschieben des Förderers von der ersten Einstellposition in die zweite Einstellposition, so dass neue Laborartikel-Verbrauchsmaterialien an der Öffnung in dem Arbeitsdeck präsentiert werden.

## Revendications

1. Appareil de laboratoire pour le stockage et la distribution d'échantillons ou de matériel de laboratoire comprenant :
une pluralité de supports (110) pour maintenir un ou plusieurs récipients d'échantillons ou de consommables de laboratoire dans une première position définie ;
un convoyeur pour un mouvement de translation de la pluralité de supports d'une première position définie à une deuxième position définie, le convoyeur comprenant une première poulie (201) d'un premier ensemble de poulies reliée en translation par une première courroie crantée (204) à une deuxième poulie du premier ensemble de poulies (601), et une première poulie d'un deuxième ensemble de poulies reliée en translation par une deuxième courroie crantée à une deuxième poulie du deuxième ensemble de poulies ;
la première poulie (201) du premier ensemble et la première poulie du deuxième ensemble (601) étant reliées par un premier axe (314), et la deuxième poulie du premier ensemble et la deuxième poulie du deuxième ensemble étant reliées par un deuxième axe ; la pluralité de supports (110) étant fixée aux première et/ou deuxième courroies crantées et se déplaçant en translation avec les première et/ou deuxième courroies crantées ;
une source d'énergie (104) pour faire avancer en translation le convoyeur d'une première position définie à une deuxième position définie ou position d'accès de travail ;
les supports étant des poutres (110), et
au moins un côté (411) de cadre pour guider la pluralité de supports (110) d'une première position définie à une deuxième position définie ou position d'accès de travail, **caractérisé en ce qu'**une extrémité distale d'au moins une poutre est accouplée avec une rainure comprise dans ledit au moins un côté (411) de cadre ;
comprenant également éventuellement une rainure (407) de sortie permettant le libre mouvement de la pluralité de supports autour du diamètre extérieur de la poulie (201) et permettant à la pluralité de supports de passer de la partie supérieure de la courroie crantée à la partie inférieure de la courroie crantée.

2. Appareil de laboratoire selon la revendication 1, la pluralité de supports étant configurée pour maintenir un récipient de matériel de laboratoire ou un récipient d'échantillon entre deux rangées de poutres.

3. Appareil de laboratoire selon l'une quelconque des revendications 1 à 2, les premier et deuxième axes étant positionnés sensiblement perpendiculairement aux premier et deuxième ensembles d'au moins deux poulies.

4. Appareil de laboratoire selon l'une quelconque des revendications 1 à 3, la pluralité de supports étant fixée de façon réversible à la courroie crantée.

5. Appareil de laboratoire selon l'une quelconque des revendications 1 à 4 comprenant en outre un plateau (301) de travail, le plateau (301) de travail étant une surface généralement plate et l'appareil étant placé dans un tiroir (305) situé sous le plateau de travail, le tiroir (305) étant éventuellement configuré pour être ouvert, fournissant ainsi un accès à l'appareil.

6. Appareil de laboratoire selon l'une quelconque des revendications 1 à 5, la position d'accès de travail présentant au moins un support pour un matériel de laboratoire au niveau d'une ouverture (308) dans le plateau de travail, permettant ainsi l'accès d'un portique ou d'un bras robotisé à au moins un support dans une deuxième position définie ou position d'accès de travail.

7. Appareil de laboratoire selon l'une quelconque des revendications 1 à 6, **caractérisé en outre en ce que** la pluralité de supports est fixée aux première et deuxième courroies crantées ou chaînes et espacée le long de celles-ci de telle sorte qu'un ou plusieurs des récipients s'ajustent dans un espace de maintien entre deux supports et soient maintenus fermement par ceux-ci ; les supports étant éventuellement fixés aux courroies crantées par l'intermédiaire de crampons (311), et les crampons comprenant une rainure ou une saillie qui interagit avec les courroies crantées.

8. Appareil de laboratoire selon l'une quelconque des revendications 1 à 7, le matériel de laboratoire comprenant des pointes de pipettes et le ou les récipients pour matériel de laboratoire comprenant chacun 96 ou 384 pointes de pipette ; ou l'appareil ayant une capacité d'au moins 960 pointes de pipette ou dix récipients pour matériel de laboratoire.

9. Appareil de laboratoire selon l'une quelconque des revendications 1 à 8, au moins un axe (314) étant lié en translation à la source d'énergie ; ou les consommables de laboratoire comprenant des pointes de pipettes et/ou des échantillons.

10. Appareil de laboratoire selon l'une quelconque des revendications 1 à 9, la pluralité de supports étant espacée de telle sorte qu'un récipient de consommables de laboratoire ou d'échantillons puisse être maintenu entre deux supports ; ou la pluralité de poutres ménageant au moins deux espaces de maintien.

11. Appareil de laboratoire selon l'une quelconque des revendications 1 à 10, la source d'énergie étant un moteur (104) ; ou la position d'accès de travail présentant au moins un support pour matériel de laboratoire au niveau d'une ouverture (308) dans le plateau de travail, permettant ainsi l'accès d'un portique ou d'un bras robotisé à au moins un support dans une deuxième position définie ou position d'accès de travail, l'ouverture (308) dans le plateau (301) de travail comprenant une interface avec un instrument de laboratoire associé.

12. Appareil de laboratoire selon l'une quelconque des revendications 1 à 11, l'appareil de laboratoire étant compris sous un instrument de laboratoire associé ; ou l'appareil de laboratoire étant compris dans un tiroir.

13. Procédé de stockage et de distribution d'échantillons ou de matériel de laboratoire comprenant : la mise en place d'un appareil de laboratoire selon l'une quelconque des revendications 1 à 12 comprenant au moins un récipient de consommables de laboratoire dans au moins l'un de la pluralité de supports ; l'utilisation éventuelle d'au moins une partie des consommables de laboratoire dans le ou les récipients ; l'avancement du convoyeur de la première position définie à la deuxième position définie.

14. Procédé de stockage et de distribution d'échantillons ou de matériel de laboratoire comprenant : la mise en place d'un appareil de laboratoire selon la revendication 5 comprenant au moins un récipient de consommables de laboratoire dans au moins l'un de la pluralité de supports ; l'utilisation éventuelle d'au moins une partie des consommables de laboratoire dans le ou les récipients ; l'avancement du convoyeur de la première position définie à la deuxième position définie de telle sorte que de nouveaux consommables de laboratoire soient présentés au niveau de l'ouverture dans le plateau de travail.
